# EUROPEAN PATENT APPLICATION

(11) **EP 4 692 918 A1**
(43) Date of publication of application: **11.02.2026**
(21) Application number: 24935481.2
(22) Date of filing: 24.04.2024
(51) Int. Cl.: G02F 1/1679, G02F 1/16753, G02F 1/167, G02F 1/1677

(54) **THIN-FILM TRANSISTOR PLASMA DISPLAY MODULE HAVING ISOLATION STRUCTURE AND PLASMA DISPLAY SCREEN**

(30) Priority: 15.04.2024 CN 202410444895
(71) Applicant: Wuxi Vision Peak Technology Co., Ltd., Wuxi, Jiangsu 214028 (CN)
(72) Inventor: BAO, Jin, Wuxi, Jiangsu 214028 (CN); CHEN, Shan, Wuxi, Jiangsu 214028 (CN); TANG, Zhenxing, Wuxi, Jiangsu 214028 (CN); XU, Jun, Wuxi, Jiangsu 214028 (CN)
(74) Representative: Bayramoglu et al.
(86) International application number: PCT/CN2024/089439
(87) International publication number: WO 2025/217943

(57) **Abstract**

The present disclosure relates to a thin film transistor (TFT) plasma display module with an isolation structure, including a first substrate and a second substrate disposed opposite to the first substrate, where a filter layer is disposed on a surface of the first substrate facing the second substrate, a pixel electrode layer is disposed on a surface of the second substrate facing the first substrate, and an isolation layer is disposed on a surface of the pixel electrode layer facing the first substrate; and the isolation layer is provided with a plasma isolation structure that extends toward the first substrate, the filter layer is provided with a gap notch, conductive medium layers are respectively disposed on surfaces that are of the filter layer and the gap notch and face the second substrate, and an end of the plasma isolation structure away from the second substrate is embedded in the gap notch. By providing the gap notch in the filter layer and embedding an upper end of the plasma isolation structure in the gap notch, the present disclosure enhances overall structural strength of a display panel, reduces movement of plasma materials, and improves overall pressure resistance.

## Description

### TECHNICAL FIELD

The present disclosure relates to the technical field of electronic paper display, and in particular, to a thin film transistor (TFT) plasma display module with an isolation structure and a plasma display panel.

### BACKGROUND TECHNOLOGY

The structure of the existing plasma display panel mainly consists of a glass substrate, a filter, an indium tin oxide (ITO) layer, and a plasma barrier rib from top to bottom. A gap is reserved between the plasma barrier rib and the ITO layer to form a plasma flow opening, and an upper cover plate and a lower cover plate are prone to deformation caused by an external force, so the display panel has poor pressure resistance. Meanwhile, a service life of the existing plasma display panel is related to a refresh cycle life and improving the refresh cycle life can extend the overall service life of the plasma display panel. Therefore, how to increase overall structural strength of the display panel, reduce the deformation of the upper cover plate and the lower cover plate, and improve overall pressure resistance and the refresh cycle life of the display panel has become an urgent technical problem to be solved by those skilled in the art.

### CONTENT OF THE INVENTION

The present disclosure provides a TFT plasma display module with an isolation structure, which can improve overall pressure resistance and a refresh cycle life of a display panel.

A technical solution of the present disclosure is as follows: A TFT plasma display module with an isolation structure includes a first substrate and a second substrate disposed opposite to the first substrate, where a plasma display cavity is formed between the first substrate and the second substrate, and the plasma display cavity is filled with plasma particles;
a filter layer is disposed on a surface of the first substrate facing the second substrate, a pixel electrode layer is disposed on a surface of the second substrate facing the first substrate, and an isolation layer is disposed on a surface of the pixel electrode layer facing the first substrate; and
the isolation layer is provided with a plasma isolation structure that extends toward the first substrate, the filter layer is provided with a gap notch, conductive medium layers are respectively disposed on surfaces that are of the filter layer and the gap notch and face the second substrate, and an end of the plasma isolation structure away from the second substrate is embedded in the gap notch.

Further, the filter layer includes a plurality of color filters disposed at intervals, and the gap notch is disposed between adjacent ones of the plurality of color filters or inside each of the plurality of color filters.

Further, the pixel electrode layer includes a plurality of pixel electrodes distributed in an array, and when the gap notch is disposed between the adjacent ones of the plurality of color filters, an end of the plasma isolation structure away from the first substrate covers a gap between adjacent ones of the plurality of pixel electrodes.

Further, the plasma isolation structure is a frustum structure.

Further, when the gap notch is disposed inside each of the plurality of color filters, a plurality of gap notches are provided and are arranged uniformly, and the plasma isolation structure is a conical frustum structure.

Further, when the gap notch is disposed between the adjacent ones of the plurality of color filters, the plasma isolation structure is disposed on a connecting edge of the adjacent ones of the plurality of color filters, and the plasma isolation structure is a prismatic frustum structure or a conical frustum structure; or the plasma isolation structure is disposed at a connecting corner of the adjacent ones of the plurality of color filters, the plasma isolation structure includes two to four frustum baffles, and the frustum baffles are disposed at a 90° included angle with a same center.

Further, the plasma display cavity is internally provided with a support structure.

Further, the support structure includes support microspheres, and the support microspheres are respectively tangent to the conductive medium layer and the isolation layer.

Further, the end of the plasma isolation structure away from the second substrate is embedded in the gap notch.

Another technical solution of the present disclosure is as follows: A plasma display panel includes the TFT plasma display module with an isolation structure according to any one of the above implementations.

Beneficial effects of the present disclosure: By providing a gap notch in a filter layer and embedding an upper end of a plasma isolation structure in the gap notch, the present disclosure enhances overall structural strength of a display panel, reduces movement of plasma particles, reduces deformation of upper and lower cover plates caused by an external force, and improves overall pressure resistance. The present disclosure provides an isolation layer to isolate a pixel electrode from plasma, which can effectively improve a refresh cycle life.

### DESCRIPTION OF THE DRAWINGS

FIG. 1 is a schematic diagram of an arrangement of a plasma isolation structure according to Embodiment 1 of the present disclosure;
FIG. 2 is a sectional view along A-A shown in FIG. 1;
FIG. 3 is a schematic diagram of an arrangement of a plasma isolation structure according to Embodiment 2 of the present disclosure;
FIG. 4 is a schematic diagram of an arrangement of a plasma isolation structure according to Embodiment 3 of the present disclosure;
FIG. 5 is a schematic diagram of an arrangement of a plasma isolation structure according to Embodiment 4 of the present disclosure;
FIG. 6 is a schematic diagram of an arrangement of a plasma isolation structure according to Embodiment 5 of the present disclosure;
FIG. 7 is a schematic diagram of an arrangement of a plasma isolation structure according to Embodiment 6 of the present disclosure;
FIG. 8 is a schematic diagram of an arrangement of a plasma isolation structure according to Embodiment 7 of the present disclosure;
FIG. 9 is a schematic diagram of an arrangement of a plasma isolation structure according to Embodiment 8 of the present disclosure;
FIG. 10 is a schematic diagram of an arrangement of a plasma isolation structure according to Embodiment 9 of the present disclosure; and
FIG. 11 is a sectional view along A-A shown in FIG. 10.

### SPECIFIC IMPLEMENTATIONS

To make persons skilled in the art better understand the solutions in the present disclosure, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

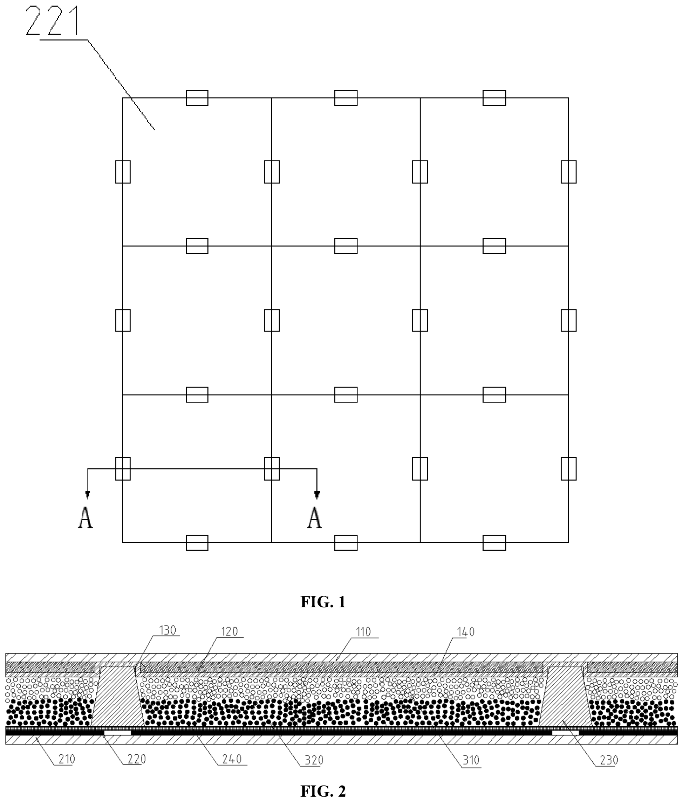

In a technical solution of the present disclosure, FIG. 1 and FIG. 2 are schematic diagrams of a TFT plasma display module with an isolation structure according to an embodiment of the present disclosure. As shown in FIG. 1 and FIG. 2, the present disclosure specifically includes first substrate 110 and second substrate 210 disposed opposite to the first substrate 110. A plasma display cavity is formed between the first substrate 110 and the second substrate 210, and the plasma display cavity is filled with plasma particles. The plasma particles include white particle 310 and black particle 320. As shown in FIG. 2, dark particles are black plasma particles, and light particles are white plasma particles. It should be understood that the plasma particles 320 may further include two-color, three-color or multi-color pigment particles, which may be selected as required and are not limited herein. The first substrate and the second substrate may be glass substrates, and the second substrate may be a TFT glass substrate.

Filter layer 120 is disposed on a surface of the first substrate 110 facing the second substrate 210, pixel electrode layer 220 is disposed on a surface of the second substrate 210 facing the first substrate 110, and isolation layer 240 is disposed on a surface of the pixel electrode layer 220 facing the first substrate 110. The isolation layer is configured to isolate the pixel electrode layer from the plasma display cavity to prevent direct contact between a pixel electrode and plasma, which can significantly improve a refresh cycle life. Meanwhile, the isolation layer can make the pixel electrode layer flatter, facilitating a better arrangement of a plasma isolation structure. The isolation layer may be made of a polyimide (PI) material.

The isolation layer 240 is provided with the plasma isolation structure 230 that extends toward the first substrate 110. The filter layer 120 is provided with gap notch 130, and conductive medium layers 140 are respectively disposed on surfaces that are of the filter layer 120 and the gap notch 130 and face the second substrate 210. An end of the plasma isolation structure 230 away from the second substrate 210 is embedded in the gap notch 130. More specifically, the end of the plasma isolation structure 230 away from the second substrate 210 is embedded in the gap notch 130 and abuts against the conductive medium layer 140 inside the gap notch 130. The plasma isolation structure is embedded in the gap notch 130 of the filter layer to provide support for the upper and lower substrates. This increases overall structural strength of a display panel, reduces movement of plasma particles, reduces deformation of upper and lower cover plates caused by an external force, and enhances overall pressure resistance. In an actual manufacturing process, the plasma isolation structure 230 may be first formed on the first substrate 110 and then connected to the second substrate 210, or may be first formed on the second substrate 210 and then connected to the first substrate 110. This is not limited herein.

The filter layer 120 may include a plurality of color filters disposed at intervals. The color filters include but are not limited to red, green, and blue (RGB) filters. The gap notch 130 is disposed between adjacent ones of the color filters or inside each of the color filters. The plasma isolation structure 230 is a frustum structure. The pixel electrode layer includes a plurality of pixel electrodes 221 distributed in an array.

When the gap notch 130 is disposed inside each of the color filters, a plurality of gap notches 130 are provided and are arranged uniformly, and the plasma isolation structure 230 is a conical frustum structure. When the gap notch 130 is disposed between the adjacent ones of the color filters, the plasma isolation structure 230 is disposed on a connecting edge of the adjacent ones of the color filters, and the plasma isolation structure 230 is a prismatic frustum structure or a conical frustum structure; or the plasma isolation structure 230 is disposed at a connecting corner of the adjacent ones of the color filters, the plasma isolation structure 230 includes two to four frustum baffles 231, and the frustum baffles 231 are disposed at a 90° included angle with a same center.

The plasma display cavity 300 is internally provided with a support structure, which is not shown in the figure. Specifically, the support structure may include support microspheres, and the support microspheres are respectively tangent to the conductive medium layer 140 and the isolation layer 240. The support microspheres mainly achieve a supporting and fixing effect to improve pressure resistance of the panel, such that an image will not be blurred or deformed when the panel is pressed during display, thereby improving stability of the displayed image.

In Embodiment 1 shown in FIG. 1 and FIG. 2, the gap notch 130 is disposed on the connecting edge of the adjacent ones of the color filters. Specifically, one gap notch 130 is provided on each connecting edge, that is, one plasma isolation structure is provided on each connecting edge, and the gap notch 130 is located at a center of each connecting edge. An end of the plasma isolation structure 230 away from the first substrate 110 covers a gap between adjacent ones of the pixel electrodes 221. As can be seen from a schematic diagram of the arrangement of the plasma isolation structure in FIG. 1 and the sectional view in FIG. 2, the plasma isolation structure in this embodiment is a prismatic frustum structure.

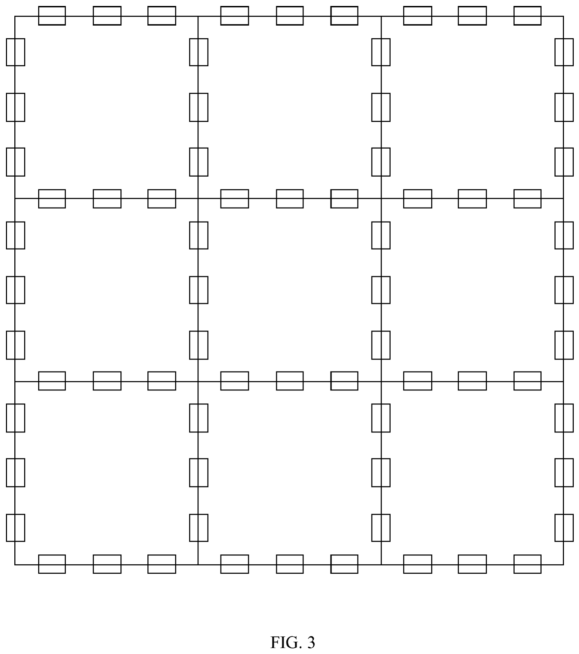

In Embodiment 2 shown in FIG. 3, different from Embodiment 1, each connecting edge is provided with a plurality of plasma isolation structures and is specifically provided with three plasma isolation structures, as shown in the figure. The plasma isolation structures on each connecting edge are disposed symmetrically with respect to a diagonal.

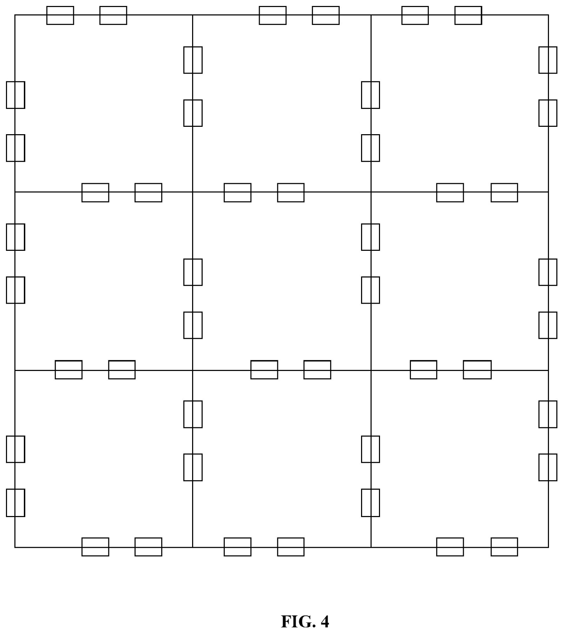

In Embodiment 3 shown in FIG. 4, different from Embodiment 2, the plasma isolation structures on each connecting edge are disposed in a staggered manner.

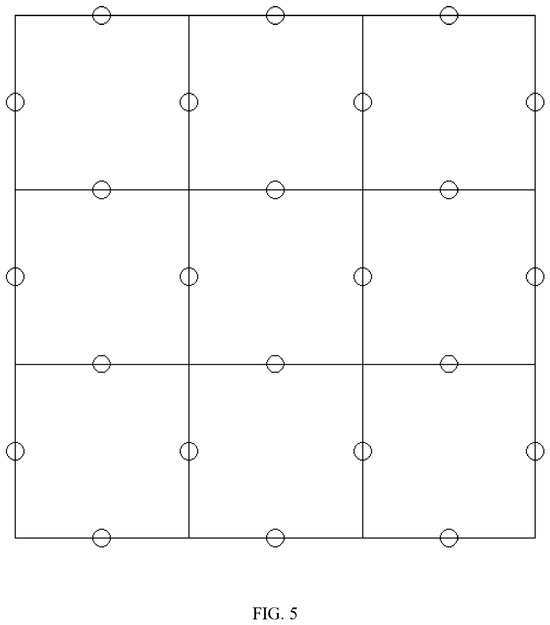

In Embodiment 4 shown in FIG. 5, different from Embodiment 1, the plasma isolation structure is the conical frustum structure.

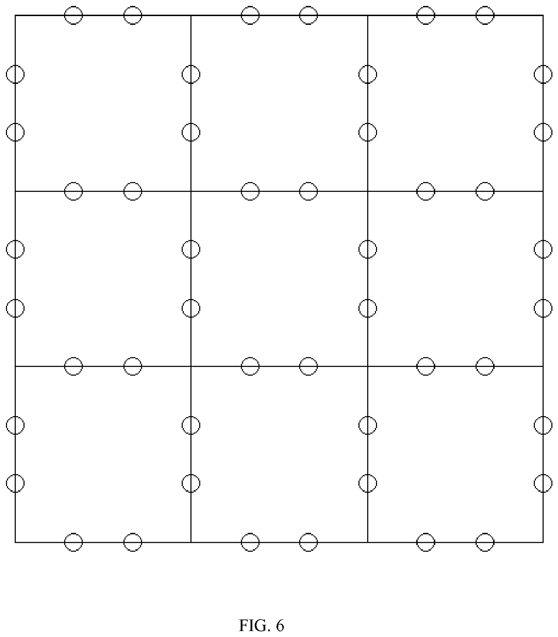

In Embodiment 5 shown in FIG. 6, different from Embodiment 2, the plasma isolation structure is the conical frustum structure.

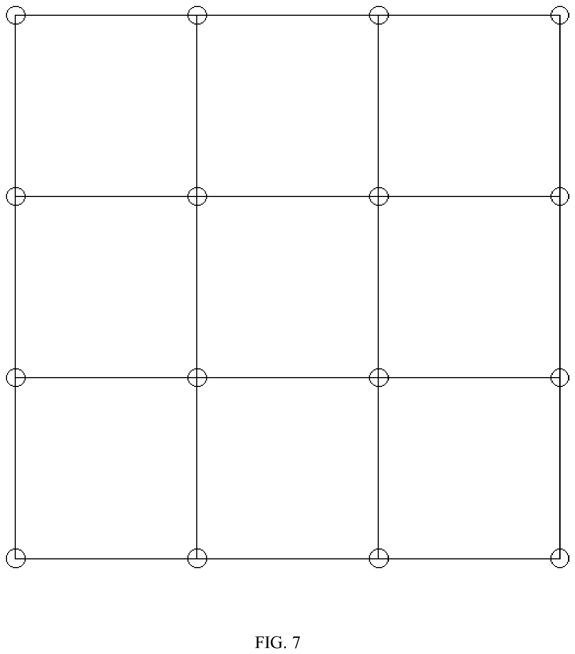

In Embodiment 6 shown in FIG. 7, the gap notch 130 is disposed at the connecting corner of the adjacent ones of the color filters, and the plasma isolation structure is the conical frustum structure.

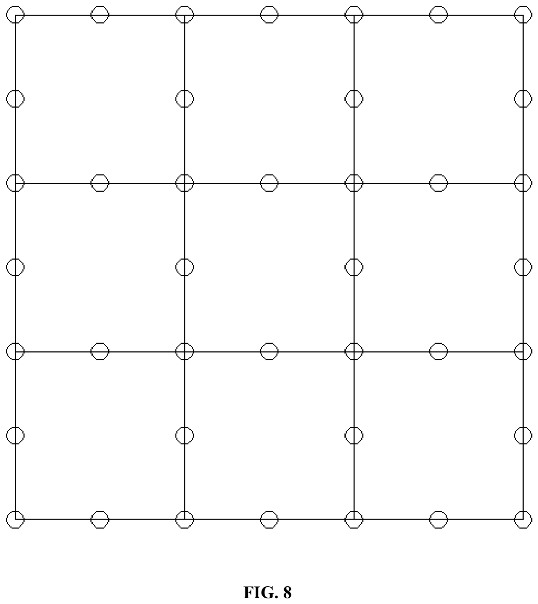

In Embodiment 7 shown in FIG. 8, different from Embodiment 6, the gap notch 130 is disposed both at the connecting corner and on the connecting edge. One gap notch 130 is provided on the connecting edge, and a specific quantity of gap notches 130 may be set based on an actual condition.

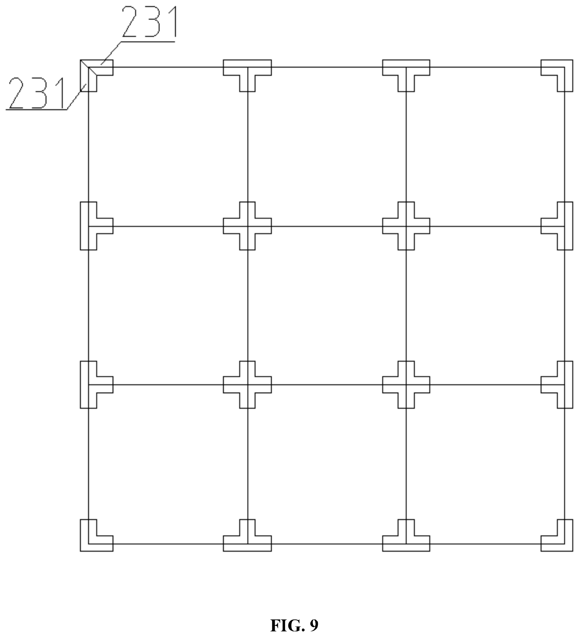

In Embodiment 8 shown in FIG. 9, different from Embodiment 6, the plasma isolation structure specifically includes the two to four frustum baffles 231, and the frustum baffles 231 are arranged at the 90° included angle with the same center. The plasma isolation structure located at a connecting corner of four color filters is composed of four frustum baffles 231, forming a structure with a cross shape in a top view. The plasma isolation structure located at a connecting corner of two color filters is composed of three frustum baffles 231, forming a structure with a T-shape in a top view. The plasma isolation structure located at a corner of a single color filter is composed of two frustum baffles 231, forming a structure with an L-shape in a top view.

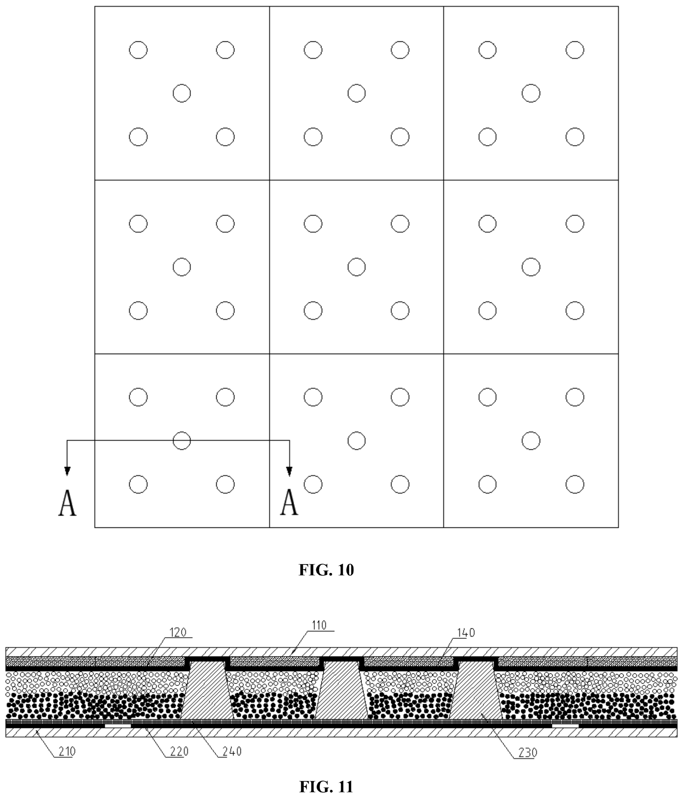

In Embodiment 9 shown in FIG. 10 and FIG. 11, the gap notch 130 is disposed inside each of the color filters. Specifically, five gap notches 130 are disposed. Four of the five gap notches 130 are arranged in a rectangle, and the other one gap notch 130 is located at a center of the rectangle. The plasma isolation structure is the conical frustum structure.

It should be noted that the plasma isolation structure can be arranged irregularly, and its sectional shape can also be in various forms, provided that the above-mentioned structural characteristics are met. It can be understood that other arrangement modes and sectional shapes of the plasma isolation structure should fall within the protection scope of the present patent.

Another technical solution of the present disclosure provides a plasma display panel, including the TFT plasma display module with an isolation structure according to any one of the embodiments described above. In a specific implementation of a display apparatus, the display apparatus may be specifically a microcapsule or microcup electronic paper display panel, a bistable reflective liquid crystal display (LCD) panel, or an LCD panel. For effects of the display apparatus, reference may be specifically made to the effects of the plasma display module described above, which is not described herein again.

It should be noted that the above specific implementations are only intended to explain, rather than to limit the technical solutions of the present disclosure. Although the present disclosure is described in detail with reference to the embodiments, those of ordinary skill in the art should understand that modifications or equivalent substitutions may be made to the technical solutions of the present disclosure without departing from the spirit and scope of the technical solutions of the present disclosure, and such modifications or equivalent substitutions should be included within the scope of the claims of the present disclosure.

## Claims

1. A thin film transistor (TFT) plasma display module with an isolation structure, comprising a first substrate (110) and a second substrate (210) disposed opposite to the first substrate (110), wherein a plasma display cavity is formed between the first substrate (110) and the second substrate (210), and the plasma display cavity is filled with plasma particles;
a filter layer (120) is disposed on a surface, facing the second substrate (210), of the first substrate (110), a pixel electrode layer (220) is disposed on a surface, facing the first substrate (110), of the second substrate (210), and an isolation layer (240) is disposed on a surface, facing the first substrate (110), of the pixel electrode layer (220); and
the isolation layer (240) is provided with a plasma isolation structure (230) extending toward the first substrate (110), the filter layer (120) is provided with a gap notch (130), conductive medium layers (140) are respectively disposed on surfaces, face the second substrate (210), of the filter layer (120) and the gap notch (130), and an end, away from the second substrate (210), of the plasma isolation structure (230) is embedded in the gap notch (130).

2. The TFT plasma display module with an isolation structure according to claim 1, wherein the filter layer (120) comprises a plurality of color filters disposed at intervals, and the gap notch (130) is disposed between adjacent ones of the plurality of color filters or inside each of the plurality of color filters.

3. The TFT plasma display module with an isolation structure according to claim 2, wherein the pixel electrode layer comprises a plurality of pixel electrodes (221) distributed in an array, and when the gap notch (130) is disposed between the adjacent ones of the plurality of color filters, an end, away from the first substrate (110), of the plasma isolation structure (230) covers a gap between adjacent ones of the plurality of pixel electrodes (221).

4. The TFT plasma display module with an isolation structure according to claim 2, wherein the plasma isolation structure (230) is a frustum structure.

5. The TFT plasma display module with an isolation structure according to claim 4, wherein when the gap notch (130) is disposed inside each of the plurality of color filters, a plurality of gap notches (130) are provided and are arranged uniformly, and the plasma isolation structure (230) is a conical frustum structure.

6. The TFT plasma display module with an isolation structure according to claim 4, wherein when the gap notch (130) is disposed between the adjacent ones of the plurality of color filters,
the plasma isolation structure (230) is disposed on a connecting edge of the adjacent ones of the plurality of color filters, and the plasma isolation structure (230) is a prismatic frustum structure or a conical frustum structure; or
the plasma isolation structure (230) is disposed at a connecting corner of the adjacent ones of the plurality of color filters, the plasma isolation structure (230) comprises two to four frustum baffles (231), and the frustum baffles (231) are disposed at a 90° included angle with a same center.

7. The TFT plasma display module with an isolation structure according to claim 1, wherein the plasma display cavity is internally provided with a support structure.

8. The TFT plasma display module with an isolation structure according to claim 7, wherein the support structure comprises support microspheres, and the support microspheres are respectively tangent to the conductive medium layer (140) and the isolation layer (240).

9. The TFT plasma display module with an isolation structure according to claim 1, wherein the end, away from the second substrate (210), of the plasma isolation structure (230) abuts against the conductive medium layer (140).

10. A plasma display panel, comprising the TFT plasma display module with an isolation structure according to any one of claims 1 to 9.
